(19) Europäisches Patentamt
European Patent Office
Office européen des brevets

(11) **EP 3 888 897 A1**

(12) **EUROPEAN PATENT APPLICATION**
published in accordance with Art. 153(4) EPC

(43) Date of publication:
**06.10.2021 Bulletin 2021/40**

(51) Int Cl.:
**B29K 105/08** (2006.01)     **B29L 31/30** (2006.01)
**B29C 70/06** (2006.01)     **B29C 70/32** (2006.01)

(21) Application number: **19926462.3**

(22) Date of filing: **11.11.2019**

(86) International application number:
**PCT/JP2019/044102**

(87) International publication number:
**WO 2020/217573 (29.10.2020 Gazette 2020/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.04.2019 JP 2019084529**

(71) Applicant: **Nitto Boseki Co., Ltd.**
**Fukushima-shi**
**Fukushima 960-8161 (JP)**

(72) Inventors:
• **TAKAHASHI, Yuta**
**Fukushima-shi, Fukushima 960-8161 (JP)**
• **NUKUI, Yosuke**
**Fukushima-shi, Fukushima 960-8161 (JP)**
• **SANO, Kazunori**
**Fukushima-shi, Fukushima 960-8161 (JP)**
• **HIRAYAMA, Norio**
**Narashino-shi, Chiba 275-8575 (JP)**
• **SAKATA, Kazuhiro**
**Narashino-shi, Chiba 275-8575 (JP)**

(74) Representative: **Dr. Schoen, Neymeyr & Partner**
**Patentanwälte mbB**
**Bavariaring 26**
**80336 Munich (DE)**

(54) **FIBER-REINFORCED RESIN HOLLOW CYLINDRICAL BODY**

(57)     Provided is a fiber-reinforced resin hollow cylindrical body that is highly resistant to torsion and also comprises impact energy absorbency enabling the cylindrical body to be used in an energy absorbing member such as a crush box. The fiber-reinforced resin hollow cylindrical body is composed of a reinforcing fiber yarn and a resin composition with which the reinforcing fiber yarn is impregnated. The fiber diameter D of the reinforcing fiber yarn is in the range of 10.0 to 18.0 $\mu$m, the weight T of the reinforcing fiber yarn is in the range of 100 to 1500 tex, the volume content V of the reinforcing fiber yarn in the fiber-reinforced resin hollow cylindrical body is in the range of 40.0 to 80.0%, the D, T and V satisfy the following formula (1):

$$0.090 \leq T^{1/4} \times V/D^3 \leq 0.155 ... (1). \qquad (1)$$

EP 3 888 897 A1

**Description**

Technical Field

The present invention relates to a fiber-reinforced resin hollow cylindrical body.

Background Art

For weight reduction and improvement of fuel efficiency and reduction of exhaust emissions by weight reduction, replacement of metal materials forming automobile members with lightweight fiber-reinforced resin materials has been widely contemplated. Examples of the automobile members include hollow cylindrical bodies such as a drive shaft, a propeller shaft, and a crush box.

As a fiber-reinforced material for forming hollow cylindrical bodies, filament winding molded articles have been conventionally known (e.g., see Patent Literature 1).

Citation List

Patent Literature

Patent Literature 1: Japanese Patent Laid-Open No. 6-143273

Summary of Invention

Technical Problem

Conventional filament winding molded articles, however, have a disadvantage of being relatively easily broken when used as members to be strongly twisted such as shafts of automobiles.

It is an object of the present invention to solve the disadvantage, and to provide the fiber-reinforced resin hollow cylindrical body that is highly resistant to torsion, and also comprises impact energy absorbency enabling the hollow cylindrical body to be used in an energy absorbing member such as a crush box.

Solution to Problem

In order to achieve the object, a fiber-reinforced resin hollow cylindrical body of the present invention is a fiber-reinforced resin hollow cylindrical body comprising a reinforcing fiber yarn and a resin composition with which the reinforcing fiber yarn is impregnated, wherein the fiber diameter D of the reinforcing fiber yarn is in the range of 10.0 to 18.0 $\mu$m, the weight T of the reinforcing fiber yarn is in the range of 100 to 1500 tex, the volume content V of the reinforcing fiber yarn in the fiber-reinforced resin hollow cylindrical body is in the range of 40.0 to 80.0%, and the D, T and V satisfy the following formula (1):

$$0.090 \leq T^{1/4} \times V/D^3 \leq 0.155...(1).$$

According to the fiber-reinforced resin hollow cylindrical body of the present invention, when the D, T and V satisfy the formula (1), the maximum shear stress can be 300 MPa or more and the elastic shear modulus can be 11.0 GPa or more. Accordingly, resistance to intense torsion and impact energy absorbency enabling the hollow cylindrical body to be used in an energy absorbing member can be achieved.

In the fiber-reinforced resin hollow cylindrical body of the present invention, it is preferable that the D be in the range of 10.5 to 16.0 $\mu$m, the T be in the range of 150 to 1100 tex, the V be in the range of 55.0 to 75.0%, and the D, T and V satisfy the following formula (2):

$$0.111 \leq T^{1/4} \times V/D^3 \leq 0.127...(2)$$

According to the fiber-reinforced resin hollow cylindrical body of the present invention, when the D, T and V satisfy the formula (2), the maximum shear stress can be 330 MPa or more, and the elastic shear modulus can be 12.0 GPa or more. Accordingly, resistance to more intense torsion and larger impact energy absorbency can be achieved.

In the fiber-reinforced resin hollow cylindrical body of the present invention, the D, T and V more preferably satisfy the following formula (3):

$$0.115 \leq T^{1/4} \times V/D^3 \leq 0.125 \qquad ...(3)$$

According to the fiber-reinforced resin hollow cylindrical body of the present invention, when the D, T and V satisfy the formula (3), the maximum shear stress can be 335 MPa or more, and the elastic shear modulus can be 13.0 GPa or more. Accordingly, resistance to still more intense torsion and still larger impact energy absorbency can be achieved.

In the fiber-reinforced resin hollow cylindrical body of the present invention, it is preferable that the D be in the range of 12.0 to 15.0 $\mu$m, the T be in the range of 350 to 950 tex, and the V be in the range of 57.5 to 70.0%. According to the fiber-reinforced resin hollow cylindrical body of the present invention, when the D, T and V are each in the range, excellent impact energy absorbency can be achieved.

In the fiber-reinforced resin hollow cylindrical body of the present invention, an example of the reinforcing fiber yarn can be a glass fiber yarn. In the fiber-reinforced resin hollow cylindrical body of the present invention, a plurality of the reinforcing fiber yarns is preferably disposed spirally and in directions intersecting with one another in the fiber-reinforced resin hollow cylindrical body.

The fiber-reinforced resin hollow cylindrical body of the present invention can be a filament winding molded article.

A shaft material of the present invention is composed of the fiber-reinforced resin hollow cylindrical body of the present invention.

An energy absorbing member of the present invention is composed of the fiber-reinforced resin hollow cylindrical body of the present invention.

In the energy absorbing member of the present invention, the fiber-reinforced resin hollow cylindrical body preferably comprises a taper portion at the upper end or the lower end thereof, the portion gradually tapering toward the end face.

Description of Embodiments

Hereinafter, embodiments of the present invention will be described in more detail.

The fiber-reinforced resin hollow cylindrical body of the present embodiment is a fiber-reinforced resin hollow cylindrical body comprising a reinforcing fiber yarn and a resin composition with which the reinforcing fiber yarn is impregnated, wherein the fiber diameter D of the reinforcing fiber yarn is in a range of 10.0 to 18.0 $\mu$m, the weight T of the reinforcing fiber yarn is in a range of 100 to 1500 tex, the volume content V of the reinforcing fiber yarn in the fiber-reinforced resin hollow cylindrical body is in a range of 40.0 to 80.0%, and the D, T and V satisfy the following formula (1):

$$0.090 \leq T^{1/4} \times V/D^3 \leq 0.155 ...(1).$$

In the fiber-reinforced resin hollow cylindrical body of the present embodiment, from the viewpoint of achieving resistance to intense torsion and impact energy absorbency enabling the hollow cylindrical body to be used in an energy absorbing member, the D is in the range of 10.5 to 16.0 $\mu$m, the T is in the range of 150 to 1100 tex, the V is in the range of 55.0 to 75.0%, the D, T and V preferably satisfy the following formula (2), and the D, T and V more preferably satisfy the following formula (3), and particularly preferably satisfy the following formula (4). When the D, T and V satisfy the formula (4), the maximum shear stress can be 350 MPa or more, and the elastic shear modulus can be 13.0 GPa or more. Accordingly, resistance to particularly intense torsion and particularly large impact energy absorbency can be achieved.

$$0.111 \leq T^{1/4} \times V/D^3 \leq 0.127 ...(2)$$

$$0.115 \leq T^{1/4} \times V/D^3 \leq 0.125 ...(3)$$

$$0.118 \leq T^{1/4} \times V/D^3 \leq 0.124 ...(4)$$

In the fiber-reinforced resin hollow cylindrical body of the present embodiment, from the viewpoint of achieving excellent impact energy absorbency, it is preferable that the D is in the range of 12.0 to 15.0 $\mu$m, the T is in the range of 350 to 950 tex, and the V is in the range of 57.5 to 70.0%. It is more preferable that the D is in the range of 13.5 to 14.5 $\mu$m,

and the T is in the range of 580 to 950 tex. It is particularly preferable that the T is in the range of 700 to 900 tex.

In the fiber-reinforced resin hollow cylindrical body of the present embodiment, in the case where the reinforcing fiber yarn is composed of a plurality of filaments bundled, the fiber diameter D of the reinforcing fiber yarn usually means the diameter of the filaments comprising a circular cross-sectional shape. The diameter of the filaments can be measured in compliance with JIS R 3420:2013. In the case where the filaments each comprise a cross-sectional shape other than a circular shape (e.g., an oval shape, long-oval shape, rectangular shape, or cocoon shape), the fiber diameter D means the diameter of a circle having the same area as the area of the cross-sectional shape. Here, in the case where the filaments each have a flat cross-sectional shape other than a circular shape, the ratio of the major axis (longer side) to the minor axis (shorter side) (major axis/minor axis) is, for example, in the range of 1.2 to 10.0 and preferably in the range of 2.0 to 6.0. In the case where the reinforcing fiber yarn is composed of a plurality of types of reinforcing fiber yarns, the number average value of the fiber diameters of the reinforcing fiber yarns is taken as the fiber diameter D.

In the fiber-reinforced resin hollow cylindrical body of the present embodiment, the weight T of the reinforcing fiber yarn can be measured in compliance with JIS R 3420:2013. In the case where the reinforcing fiber yarn is composed of a plurality of types of reinforcing fiber yarns, the number average value of the weights of the reinforcing fiber yarns is taken as the weight T.

In the case where the reinforcing fiber yarn is inorganic fiber, the reinforcing fiber yarn having no organic matter attached thereto, which includes the resin composition, can be removed from the fiber-reinforced resin hollow cylindrical body by heating the fiber-reinforced resin hollow cylindrical body in, for example, a muffle furnace at 300 to 600°C for about 2 to 24 hours. The fiber diameter D and weight T can be measured using this reinforcing fiber yarn.

In the fiber-reinforced resin hollow cylindrical body of the present embodiment, the volume content V can be measured in compliance with JIS K 7053:1999.

In the fiber-reinforced resin hollow cylindrical body of the present embodiment, examples of the reinforcing fiber yarn can include glass fiber yarns, carbon fiber yarns, aramid fiber yarn, and alumina fiber yarn, and these also may be used in combination. In view of excellent versatility, incombustibility, insulation properties, and impact energy absorbency, a glass fiber yarn can be preferably used as the reinforcing fiber yarn. Here, the glass fiber yarn may be a glass fiber yarn composed of glass filaments each comprising a circular cross-section bundled or may be a glass fiber yarn composed of glass filaments each comprising a cross-sectional shape other than a circular shape (e.g., a flat cross-section such as an oval shape, long-oval shape, rectangular shape, or cocoon shape, preferably a long-oval cross-section) bundled. From the viewpoint of versatility, the glass fiber yarn is preferably a glass fiber yarn composed of glass filaments each having a circular cross-section bundled. In the case where plural types of reinforcing fiber yarns are used in combination, a glass fiber yarn and a carbon fiber yarn are preferably used in combination because the balance among mechanical strength, torsion resistance, and impact energy absorbency is excellent. In the case where the glass fiber yarn and the carbon fiber yarn are used in combination, the fiber-reinforced resin hollow cylindrical body of the present embodiment can include, for example, a layer composed of the glass fiber yarn as an inner layer and can include a layer composed of the carbon fiber yarn as an outer layer. Here, from the viewpoint of achieving both economic efficiency and mechanical strength, the number of layers composed of the carbon fiber yarn is preferably set to 10 to 50% with respect to the total number of layers.

In the fiber-reinforced resin hollow cylindrical body of the present embodiment, a plurality of the reinforcing fiber yarns is preferably disposed spirally and in directions intersecting with one another in the fiber-reinforced resin hollow cylindrical body. Here, the intersection angle between the reinforcing fiber yarns intersecting with each other is, for example, 60 to 160° and preferably 80 to 130°.

The glass composition of the glass fiber yarn is not particularly limited. Examples of the glass composition that may be taken by the glass fiber yarn can include the most common E glass composition (composition including $SiO_2$ in the range of 52.0 to 56.0% by mass, $Al_2O_3$ in the range of 12.0 to 16.0% by mass, MgO and CaO in the range of 20.0 to 25.0% by mass in total, and $B_2O_3$ in the range of 5.0 to 10.0% by mass, represented in terms of oxide, with respect to the total amount of the glass fiber), a high strength and high modulus glass composition (composition including $SiO_2$ in the range of 64.0 to 66.0% by mass, $Al_2O_3$ in the range of 24.0 to 26.0% by mass, and MgO in the range of 9.0 to 11.0% by mass, represented in terms of oxide, with respect to the total amount of the glass fiber), a high modulus and easily-producible glass composition (composition including $SiO_2$ in the range of 57.0 to 60.0% by mass, $Al_2O_3$ in the range of 17.5 to 20.0% by mass, MgO in the range of 8.5 to 12.0% by mass, CaO in the range of 10.0 to 13.0% by mass, $B_2O_3$ in the range of 0.5 to 1.5% by mass, and $SiO_2$, $Al_2O_3$, MgO, and CaO of 98.0% by mass or more in total, represented in terms oxide, with respect to the total amount of the glass fiber), and a low dielectric constant and low dielectric glass composition (composition including $SiO_2$ in the range of 48.0 to 62.0% by mass, $B_2O_3$ in the range of 17.0 to 26.0% by mass, $Al_2O_3$ in the range of 9.0 to 18.0% by mass, CaO in the range of 0.1 to 9.0% by mass, MgO in the range of 0 to 6.0% by mass, $Na_2O$, $K_2O$, and $Li_2O$ in the range of 0.05 to 0.5% by mass in total, $TiO_2$ in the range of 0 to 5.0% by mass, SrO in the range of 0 to 6.0% by mass, $F_2$ and $Cl_2$ in the range of 0 to 3.0% by mass in total, and $P_2O_5$ in the range of 0 to 6.0% by mass, with respect to the total amount of the glass fiber). From the viewpoint of versatility, the glass fiber yarn is preferably a glass fiber yarn comprising the E glass composition (E glass fiber yarn).

Regarding measurement of the content of each component described above in the glass fiber yarn, the content of Li as the light element can be measured with an ICP emission spectroscopic analyzer, and the contents of the other elements can be measured with a wavelength dispersive X-ray fluorescence analyzer.

The measurement method is as follows. First, the fiber-reinforced resin hollow cylindrical body, or a glass fiber yarn separated from the fiber-reinforced resin hollow cylindrical body is, for example, heated for about 2 to 24 hours in a muffle furnace at 300 to 600°C to remove organic matter. Then, the glass fiber yarn is placed in a platinum crucible and melted with stirring while being held at a temperature of 1550°C for 6 hours in an electric furnace to obtain a homogeneous molten glass. Next, the obtained molten glass is poured onto a carbon plate to produce a glass cullet, and then pulverized into powder. Regarding Li as a light element, glass powder is thermally decomposed with an acid and then quantitatively analyzed using an ICP emission spectroscopic analyzer. Regarding other elements, glass powder is molded into a disc shape by a pressing machine and then quantitatively analyzed using a wavelength dispersive X-ray fluorescence analyzer. These quantitative analysis results are converted in terms of oxides to calculate the content of each component and the total amount, and the above content of each component (% by mass) can be determined from these numerical values.

The glass fiber yarn is produced as follows. First, a glass raw material (glass batch) prepared to have the above composition, based on components included in ores as the glass raw material, the content of each component, and the amount of each component volatilized in the melt process, is supplied to a melting furnace and melted at a temperature in the range of 1450 to 1550°C, for example. Then, the melted glass batch (melted glass) is drawn from 400 to 8000 nozzle tips of a bushing controlled at a predetermined temperature and rapidly cooled to form glass filaments. Subsequently, the glass filament formed are applied with a sizing agent or binder using an applicator as an application apparatus. While 400 to 8000 of the glass filaments are bundled using a bundling shoe, the glass filaments are wound on a tube at a high speed using a winding apparatus to obtain a glass fiber yarn (also referred to as a glass direct roving). Alternatively, the melted glass is drawn from 200 to 4000 nozzle tips of a bushing and rapidly cooled to form glass filaments. The glass filaments are applied with a sizing agent or binder. Then, 200 to 4000 of the glass filaments are bundled and wound on a tube to obtain a glass fiber strand. While unraveled from the tube, 2 to 40 of these glass fiber strands are aligned to also obtain a glass fiber yarn (also referred to as a glass bundled roving). Here, as the glass fiber yarn, a glass direct roving is preferable because of its excellent openability and resin impregnation properties.

In the fiber-reinforced resin hollow cylindrical body of the present embodiment, in order to improve the impregnation properties of the resin composition, the surface of the reinforcing fiber yarn may be surface-treated with organic matter.

Example of the organic matter for use in surface treatment of the reinforcing fiber yarn can include a silane coupling agent, epoxy resins, vinyl acetate resins, copolymer resins of vinyl acetate and another monomer, and urethane resins.

For example, in the case where the reinforcing fiber yarn is a glass fiber yarn, surface treatment of the reinforcing fiber yarn can be performed by applying the glass fiber yarn with a treatment liquid including the organic matter as a sizing agent or a binder during production of the glass fiber yarn described above.

In the fiber-reinforced resin hollow cylindrical body of the present embodiment, the resin composition may include a resin alone or may include a resin and additives. The resin may be a thermosetting resin or a thermoplastic resin.

Examples of the above thermosetting resin can include unsaturated polyester resins, vinyl ester resins, epoxy (EP) resins, melamine (MF) resins, phenol resins (PF), urethane resins (PU), polyisocyanate, polyisocyanurate, polyimide (PI), urea (UF) resins, silicon (SI) resins, furan (FR) resins, benzoguanamine (BR) resins, alkyd resins, xylene resins, bismaleide triazine (BT) resins, and diallyl phthalate resin (PDAP).

Specific examples of the unsaturated polyester include resins obtained by esterification reaction of aliphatic unsaturated dicarboxylic acid and aliphatic diol.

Examples of the vinyl ester resin include bis vinyl ester resins and novolac vinyl ester resins.

Examples of the epoxy resin include bisphenol A epoxy resins, bisphenol F epoxy resins, bisphenol E epoxy resins, bisphenol S epoxy resins, bisphenol M epoxy resins (4,4'-(1,3-phenylenediisopropylidene)bisphenol epoxy resins), bisphenol P epoxy resins (4,4'-(1,4-phenylenediisopropylidene)bisphenol epoxy resins), bisphenol Z epoxy resins (4,4'-cyclohexadiene bisphenol epoxy resins), phenol novolac epoxy resins, cresol novolac epoxy resins, tetraphenol group ethane novolac epoxy resins, novolac epoxy resins having a condensed ring aromatic hydrocarbon structure, biphenyl epoxy resins, aralkyl epoxy resins such as xylylene epoxy resins and phenyl aralkyl epoxy resins, naphthylene ether epoxy resins, naphthol epoxy resins, naphthalene diol epoxy resins, bifunctional or tetrafunctional epoxy naphthalene resins, binaphthyl epoxy resins, naphthalene aralkyl epoxy resins, anthracene epoxy resins, phenoxy epoxy resins, dicyclopentadiene epoxy resins, norbornene epoxy resins, adamantane epoxy resins, and fluorene epoxy resins.

Examples of the melamine resin include a polymer formed by polycondensation of melamine (2,4,6-triamino-1,3,5-triazine) and formaldehyde.

Examples of the phenolic resin include novolac phenolic resins such as phenol novolac resins, cresol novolac resins, and bisphenol A novolac resins, resol phenol resins such as methylol resole resins and dimethylene ether resole resins, or aryl alkylene phenol resins, and include one of these or combinations of two or more.

Examples of the urea resin include a resin obtained by condensation of urea and formaldehyde.

Examples of the above thermoplastic resin can include polyethylene, polypropylene, polystyrene, styrene/maleic anhydride resins, styrene/maleimide resins, polyacrylonitrile, acrylonitrile/styrene (AS) resins, acrylonitrile/butadiene/styrene (ABS) resins, chlorinated polyethylene/acrylonitrile/styrene (ACS) resins, acrylonitrile/ethylene/styrene (AES) resins, acrylonitrile/styrene/methyl acrylate (ASA) resins, styrene/acrylonitrile (SAN) resins, (meth)acrylic resins, polyvinyl chloride (PVC), polyvinylidene chloride (PVDC), polyamide, polyacetal, polyethylene terephthalate (PET), polybutylene terephthalate (PBT), polytrimethylene terephthalate (PTT), polycarbonate, polyarylene sulfide, polyethersulfone (PES), polyphenylsulfone (PPSU), polyphenylene ether (PPE), modified polyphenylene ether (m-PPE), polyaryl ketone, liquid crystal polymer (LCP), fluororesins, polyetherimide (PEI), polyarylate (PAR), polysulfone (PSF), polyamideimide (PAI), polyaminobismaleimide (PABM), thermoplastic polyimide (TPI), polyethylene naphthalate (PEN), ethylene/vinyl acetate (EVA) resins, ionomer (IO) resins, polybutadiene, styrene/butadiene resins, polybutylene, polymethylpentene, olefin/vinyl alcohol resins, cyclic olefin resins, cellulose resins, and polylactic acid.

Specific examples of the polyethylene include high density polyethylene (HDPE), medium density polyethylene, low density polyethylene (LDPE), linear low density polyethylene (LLDPE), and ultra-high molecular weight polyethylene.

Examples of the polypropylene include isotactic polypropylene, atactic polypropylene, syndiotactic polypropylene, and mixtures thereof.

Examples of the polystyrene include general-purpose polystyrene (GPPS), which is an atactic polystyrene having an atactic structure, high impact polystyrene (HIPS) with a rubber component added to GPPS, and syndiotactic polystyrene having a syndiotactic structure.

Examples of the (meth)acrylic resin include polymers obtained by homopolymerizing one of acrylic acid, methacrylic acid, styrene, methyl acrylate, ethyl acrylate, ethyl methacrylate, butyl acrylate, butyl methacrylate, and fatty acid vinyl ester, or polymers obtained by copolymerizing two or more of these.

Examples of the polyvinyl chloride include a vinyl chloride homopolymer, a copolymer of a vinyl chloride monomer and a copolymerizable monomer, or a graft copolymer obtained by graft polymerization of a vinyl chloride monomer to polymer polymerized by a conventionally known method such as emulsion polymerization method, suspension polymerization method, micro suspension polymerization method, or bulk polymerization method.

Examples of the polyamide can include one of components such as polycaproamide (nylon 6), polyhexamethylene adipamide (nylon 66), polytetramethylene adipamide (nylon 46), polytetramethylene sebacamide (nylon 410), polypentamethylene adipamide (nylon 56), polypentamethylene sebacamide (nylon 510), polyhexamethylene sebacamide (nylon 610), polyhexamethylene dodecamide (nylon 612), polydecamethylene adipamide (nylon 106), polydecamethylene sebacamide (nylon 1010), polydecamethylene dodecamide (Nylon 1012), polyundecanamide (Nylon 11), polyundecamethylene adipamide (Nylon 116), polydodecanamide (Nylon 12), polyxylene adipamide (nylon XD6), polyxylene sebacamide (nylon XD10), polymetaxylylene adipamide (nylon MXD6), polyparaxylylene adipamide (nylon PXD6), polytetramethylene terephthalamide (nylon 4T), polypentamethylene terephthalamide (nylon 5T), polyhexamethylene terephthalamide (nylon 6T), polyhexamethylene isophthalamide (nylon 6I), polynonamethylene terephthalamide (nylon 9T), polydecamethylene terephthalamide (nylon 10T), polyundecamethylene terephthalamide (nylon 11T), polydodecamethylene terephthalamide (nylon 12T), polytetramethylene isophthalamide (nylon 4I), polybis(3-methyl-4-aminohexyl) methane terephthalamide (nylon PACMT), polybis(3-methyl-4-aminohexyl) methane isophthalamide (nylon PACMI), polybis(3-methyl-4-aminohexyl) methane dodecamide (nylon PACM12), and polybis(3-methyl-4-aminohexyl) methane tetradecamide (nylon PACM14), or copolymers obtained by combining two or more of the components, and mixtures thereof.

Examples of the polyacetal include a homopolymer with oxymethylene units as the main repeating unit, and a copolymer mainly composed of oxymethylene units and containing oxyalkylene units having 2 to 8 adjacent carbon atoms in the main chain.

Examples of the polyethylene terephthalate include polymers obtained by polycondensation of terephthalic acid or a derivative thereof with ethylene glycol.

Examples of the polybutylene terephthalate include polymers obtained by polycondensation of terephthalic acid or a derivative thereof with 1,4-butanediol.

Examples of the polytrimethylene terephthalate include polymers obtained by polycondensation of terephthalic acid or a derivative thereof with 1,3-propanediol.

Examples of the polycarbonate include polymers obtained by a transesterification method in which a dihydroxydiaryl compound is reacted with a carbonate such as diphenyl carbonate in a molten state; or polymers obtained by phosgene method in which a dihydroxyaryl compound is reacted with phosgene.

Examples of the polyarylene sulfide include linear polyphenylene sulfide, crosslinked polyphenylene sulfide having a high molecular weight obtained by performing a curing reaction after polymerization, polyphenylene sulfide sulfone, polyphenylene sulfide ether, and polyphenylene sulfide ketone.

Examples of the modified polyphenylene ether include: a polymer alloy of poly(2,6-dimethyl-1,4-phenylene)ether and polystyrene; a polymer alloy of poly(2,6-dimethyl-1,4-phenylene)ether and a styrene/butadiene copolymer; a polymer alloy of poly(2,6-dimethyl-1,4-phenylene)ether and a styrene/maleic anhydride copolymer; a polymer alloy of poly(2,6-dimethyl-1,4-phenylene)ether and polyamide; and a polymer alloy of poly(2,6-dimethyl-1,4-phenylene)ether and styrene/butadiene/acrylonitrile copolymer.

Examples of the polyaryl ketone include polyetherketone (PEK), polyetheretherketone (PEEK), polyetherketoneketone (PEKK), and polyetheretherketoneketone (PEEKK).

Examples of the liquid crystal polymer (LCP) include a polymer (copolymer) composed of one or more structural units selected from aromatic hydroxycarbonyl units which are thermotropic liquid crystal polyesters, aromatic dihydroxy units, aromatic dicarbonyl units, aliphatic dihydroxy units, and aliphatic dicarbonyl units.

Examples of the fluororesin include polytetrafluoroethylene (PTFE), perfluoroalkoxy resins (PFA), fluorinated ethylene propylene resins (FEP), fluorinated ethylene tetrafluoroethylene resins (ETFE), polyvinyl fluoride (PVF), polyvinylidene fluoride (PVDF), polychlorotrifluoroethylene (PCTFE), and ethylene/chlorotrifluoroethylene resin (ECTFE).

Examples of the ionomer (IO) resin include copolymers of an olefin or a styrene and an unsaturated carboxylic acid, wherein a part of carboxyl groups is neutralized with a metal ion.

Examples of the olefin/vinyl alcohol resin include ethylene/vinyl alcohol copolymers, propylene/vinyl alcohol copolymers, saponified products of ethylene/vinyl acetate copolymers, and saponified products of propylene/vinyl acetate copolymers.

Examples of the cyclic olefin resin include monocyclic compounds such as cyclohexene, polycyclic compounds such as tetracyclopentadiene, and polymers of cyclic olefin monomers.

Examples of the polylactic acid include poly-L-lactic acid, which is a homopolymer of L-form, poly-D-lactic acid, which is a homopolymer of D-form, or a stereocomplex polylactic acid which is a mixture thereof.

Examples of the cellulose resin can include methylcellulose, ethylcellulose, hydroxycellulose, hydroxymethylcellulose, hydroxyethylcellulose, hydroxyethyl methylcellulose, hydroxypropyl methylcellulose, cellulose acetate, cellulose propionate, and cellulose butyrate.

The above thermoplastic resin or the above thermosetting resin may be used singly or in combinations of two or more.

The resin is preferably a thermosetting resin, from the viewpoint of molding workability (especially, workability during filament winding molding) and resin impregnation properties. Among them, epoxy resins are preferable because of being excellent in impregnation properties, curing rate, demoldability, and mechanical properties of molded articles.

Examples of additives that may be included in the resin composition can include reinforcing fiber (e.g., glass fiber, carbon fiber, and metal fiber), a filler (e.g., glass powder, talc, and mica), a flame retardant, an UV absorber, a heat stabilizer, an antioxidant, an antistatic agent, a fluidity improver, an anti-blocking agent, a lubricant, a nucleating agent, an antibacterial agent, a pigment, a curing agent, and a curing accelerator. The content of these additives in the resin composition is in the range of 0 to 70% by mass, preferably in the range of 10 to 65% by mass, and more preferably in the range of 30 to 60% by mass with respect to the total amount of the resin composition.

The fiber-reinforced resin hollow cylindrical body of the present embodiment can be produced by, for example, as follows.

First, a stainless steel mandrel having a predetermined outer diameter is placed in a filament winding apparatus. While, for example, two strands of a glass fiber yarn as a reinforcing fiber yarn are placed in a yarn feeding apparatus, which feeds the reinforcing fiber yarn and controls the tension, for example, an epoxy resin as a resin composition is loaded in the resin bath of the filament winding apparatus. The epoxy resin may include a curing agent and a curing accelerator.

Next, using the filament winding apparatus, the reinforcing fiber yarn is impregnated with the resin composition in the resin bath, and the reinforcing fiber yarn is wound around the mandrel to a predetermined thickness under a predetermined tension. When the reinforcing fiber yarn is wound around the mandrel using the filament winding apparatus, the yarn is wound such that the winding angle of the reinforcing fiber yarn forms a predetermined angle with respect to the rotation axis (center axis) of the mandrel.

Next, the reinforcing fiber yarn wound around the mandrel is heated at a predetermined temperature for a predetermined time, for example, at 85°C for four hours to cure the resin composition with which the reinforcing fiber yarn is impregnated. Subsequently, a fiber-reinforced resin hollow cylindrical body can be obtained by removing a cured article of the glass fiber yarn obtained by curing the resin composition from the mandrel using a core remover.

As the filament winding apparatus and the core remover, known apparatuses can be used.

As produced as described above, the fiber-reinforced resin hollow cylindrical body of the present embodiment can be obtained as a filament winding molded article and can be used as a shaft material, an energy absorbing member, or the like. The fiber-reinforced resin hollow cylindrical body of the present embodiment, when used as an energy absorbing member, can comprise a taper portion at the upper end or the lower end thereof, the portion gradually tapering toward the end face.

Examples of the shaft material can include automobile parts such as a propeller shaft and a drive shaft, and sporting equipment such as a tennis racket, a fishing rod, and a golf shaft.

Examples of the energy absorbing member can include a crush box, a front side member, and a rear side member.

Examples and Comparative Examples of the present invention will be illustrated hereinbelow.

Examples

[Example 1]

In the present example, a fiber-reinforced resin hollow cylindrical body was produced using a glass fiber yarn as a reinforcing fiber yarn and using an epoxy resin composition as a resin composition.

The glass fiber yarn comprises the E glass composition, is formed of 800 glass filaments having an average fiber diameter of 13.0 $\mu$m bundled, and has a fiber diameter D of 13.0 $\mu$m and a weight T of 280 tex. The epoxy resin composition is a mixture obtained by mixing an epoxy resin composition (manufactured by Nagase ChemteX Corporation, trade name: epoxy resin XNR6805), a curing agent (manufactured by Nagase ChemteX Corporation, trade name: XNH6805), and a curing accelerator (manufactured by Nagase ChemteX Corporation, trade name: XNA6805) at a mass ratio of 100:100:2.

Next, after a stainless steel mandrel having an outer diameter of 20 mm was placed in a filament winding apparatus, two strands of the glass fiber yarn were placed in a yarn feeding apparatus, which feeds the reinforcing fiber yarn and controls the tension, and the epoxy resin composition was loaded in the resin bath of the filament winding apparatus. The mandrel has been subjected to fine mirror finishing and demolding treatment.

Subsequently, using the filament winding apparatus, the glass fiber yarn was impregnated with the epoxy resin composition in the resin bath, and the glass fiber yarn was wound to a thickness of 2 mm around the mandrel under a tension of 0.9 kg. The operation of winding the glass fiber yarn around the mandrel by the filament winding apparatus was conducted such that, when the direction of the rotation axis (center axis) of the mandrel was taken as 0°, the winding angle would be ±45° (i.e., intersection angle 90°) with respect to in the direction of the rotation axis.

Next, the glass fiber yarn wound around the mandrel was heated at a temperature of 85°C for four hours to cure the epoxy resin composition with which the glass fiber yarn was impregnated.

Subsequently, the cured article of the glass fiber yarn impregnated with the epoxy resin composition was removed from the mandrel using a core remover to thereby obtain a fiber-reinforced hollow cylindrical body having an outer diameter of 24 mm and an inner diameter of 20 mm.

In the fiber-reinforced hollow cylindrical body obtained in the present example, the volume content V of the glass fiber yarn was 66.5%, and $T^{1/4} \times V/D^3 = 0.124$.

Next, the fiber-reinforced hollow cylindrical body obtained in the present example was cut to a length of 700 mm to produce a torsion specimen. A strain gauge was placed each at an orientation of +45° and at an orientation of -45° with respect to the center line of the obtained torsion specimen. A torque load was applied to the torsion specimen under a test speed condition of 0.5 rpm using a torque tester (manufactured by Sansei Industry Co., Ltd., trade name: 200 kg-m), and the shear strain was measured using a dynamic strain measurement apparatus (manufactured by NEC Sanei Instruments Ltd., trade name: OMNIACE IIRA1300). The maximum shear stress and elastic shear modulus were calculated from the torque and shear strain measured. The results are shown in Table 1. The values in Table 1 each are an average value of three measurements.

[Example 2]

In the present example, a fiber-reinforced hollow cylindrical body having an outer diameter of 24 mm, an inner diameter of 20 mm, and a volume content V of the glass fiber yarn of 59.6% was obtained exactly in the same manner as in Example 1, except that, as the reinforcing fiber yarn, a glass fiber yarn (fiber diameter D=14.0 $\mu$m, weight T=800 tex) composed of 2000 glass filaments having an average fiber diameter of 14.0 $\mu$m bundled was used, one strand of the glass fiber yarn was placed in the yarn feeding apparatus, and the tension during winding was set to 1.5 kg. In the fiber-reinforced hollow cylindrical body obtained in the present example, $T^{1/4} \times V/D^3 = 0.116$.

Next, the maximum shear stress and elastic shear modulus were calculated in exactly in the same manner as in Example 1 except that the fiber-reinforced hollow cylindrical body obtained in the present example was used. The results are shown in Table 1.

[Example 3]

In the present example, a fiber-reinforced hollow cylindrical body having an outer diameter of 24 mm, an inner diameter of 20 mm, and a volume content V of the glass fiber yarn of 60.8% was obtained exactly in the same manner as in Example 1 except that the tension during winding was set to 0.3 kg. In the fiber-reinforced hollow cylindrical body obtained in the present example, the value of $T^{1/4} \times V/D^3$ was 0.113.

Next, the maximum shear stress and elastic shear modulus were calculated in exactly in the same manner as in Example 1 except that the fiber-reinforced hollow cylindrical body obtained in the present example was used. The results are shown in Table 1.

[Example 4]

In the present example, a fiber-reinforced hollow cylindrical body having an outer diameter of 24 mm, an inner diameter of 20 mm, and a volume content V of the glass fiber yarn of 69.8% was obtained exactly in the same manner as in Example 1 except that the tension during winding was set to 1.5 kg. In the fiber-reinforced hollow cylindrical body obtained in the present example, $T^{1/4} \times V/D^3 = 0.130$.

Next, the maximum shear stress and elastic shear modulus were calculated in exactly in the same manner as in Example 1 except that the fiber-reinforced hollow cylindrical body obtained in the present example was used. The results are shown in Table 1.

[Example 5]

In the present example, a fiber-reinforced hollow cylindrical body having an outer diameter of 24 mm, an inner diameter of 20 mm, and a volume content V of the glass fiber yarn of 58.5% was obtained exactly in the same manner as in Example 1 except that the tension during winding was set to 0 kg. In the fiber-reinforced hollow cylindrical body obtained in the present example, $T^{1/4} \times V/D^3 = 0.109$.

Next, the maximum shear stress and elastic shear modulus were calculated in exactly in the same manner as in Example 1 except that the fiber-reinforced hollow cylindrical body obtained in the present example was used. The results are shown in Table 1.

[Example 6]

In the present example, a fiber-reinforced resin hollow cylindrical body was produced using a glass fiber yarn as a reinforcing fiber yarn 1, using a carbon fiber yarn as a reinforcing fiber yarn 2, and using an epoxy resin composition as a resin composition.

The glass fiber yarn is a glass fiber yarn composed of 2000 glass filaments having an average fiber diameter of 14.0 $\mu$m bundled (fiber diameter $D_i = 14.0$ $\mu$m, weight $T_2 = 800$ tex). The carbon fiber yarn is a carbon fiber yarn having a fiber diameter $D_2 = 7.0$ $\mu$m and a weight $T_2 = 1650$ tex. The epoxy resin composition is the same as the epoxy resin composition used in Example 1.

First, after a stainless steel mandrel having an outer diameter of 20 mm was placed in a filament winding apparatus, one strand of the glass fiber yarn as a reinforcing fiber yarn was placed in a yarn feeding apparatus, which feeds the reinforcing fiber yarn and controls the tension, and the epoxy resin composition was loaded in the resin bath of the filament winding apparatus. The mandrel has been subjected to fine mirror finishing and demolding treatment.

Subsequently, using the filament winding apparatus, the glass fiber yarn was impregnated with the epoxy resin composition in the resin bath, and the glass fiber yarn was wound under a tension of 1.5 kg to a thickness of 0.73 mm around the mandrel. The operation of winding the glass fiber yarn around the mandrel by the filament winding apparatus was conducted such that, when the direction of the rotation axis (center axis) of the mandrel was taken as 0°, the winding angle would be ±45° (i.e., intersection angle 90°) with respect to in the direction of the rotation axis.

Subsequently, using the filament winding apparatus, the glass fiber yarn was impregnated with the epoxy resin composition in the resin bath, and the glass fiber yarn was wound under a tension of 1.5 kg to a thickness of 0.73 mm around the mandrel around which the glass fiber yarn of the first layer had been wound, at a winding position different from that of the glass fiber yarn of the first layer. The operation of winding the glass fiber yarn around the mandrel by the filament winding apparatus was conducted such that, when the direction of the rotation axis (center axis) of the mandrel was taken as 0°, the winding angle would be ±45° (i.e., intersection angle 90°) with respect to in the direction of the rotation axis.

Subsequently, using the filament winding apparatus, the glass fiber yarn was impregnated with the epoxy resin composition in the resin bath, and the glass fiber yarn was wound under a tension of 1.5 kg to a thickness of 0.73 mm around the mandrel around which the glass fiber yarn of the first layer and the glass fiber yarn of the second layer had been wound, at a winding position different from those of the glass fiber yarn of the first layer and the glass fiber yarn of the second layer. The operation of winding the glass fiber yarn around the mandrel by the filament winding apparatus was conducted such that, when the direction of the rotation axis (center axis) of the mandrel was taken as 0°, the winding angle would be ±45° (i.e., intersection angle 90°) with respect to in the direction of the rotation axis.

Subsequently, using the filament winding apparatus, the carbon fiber yarn was impregnated with the epoxy resin composition in the resin bath, and the carbon fiber yarn was wound under a tension of 1.5 kg to a thickness of 1.2 mm around the mandrel around which the three layers of the glass fiber yarn in total had been wound. The operation of winding the glass fiber yarn around the mandrel by the filament winding apparatus was conducted such that, when the direction of the rotation axis (center axis) of the mandrel was taken as 0°, the winding angle would be ±45° (i.e., intersection angle 90°) with respect to in the direction of the rotation axis.

Subsequently, using the filament winding apparatus, the carbon fiber yarn was impregnated with the epoxy resin composition in the resin bath, and the carbon fiber yarn was wound under a tension of 1.5 kg to a thickness of 1.2 mm around the mandrel around which the three layers of the glass fiber yarn in total and the carbon fiber yarn of the first layer had been wound, at a winding position different from that of the carbon fiber yarn of the first layer. The operation of winding the glass fiber yarn around the mandrel by the filament winding apparatus was conducted such that, when the direction of the rotation axis (center axis) of the mandrel was taken as 0°, the winding angle would be ±45° (i.e., intersection angle 90°) with respect to in the direction of the rotation axis.

Next, the glass fiber yarn and carbon fiber yarn wound around the mandrel were heated at a temperature of 85°C for four hours to cure the epoxy resin composition with which the glass fiber yarn and carbon fiber yarn were impregnated.

Subsequently, the cured article of the glass fiber yarn and carbon fiber yarn impregnated with the epoxy resin composition was removed from the mandrel using a core remover to thereby obtain a fiber-reinforced hollow cylindrical body having an outer diameter of 29.2 mm and an inner diameter of 20 mm.

In the case where the fiber-reinforced hollow cylindrical body obtained in the present example was divided into glass fiber-reinforced layers (three layers in total) and carbon fiber-reinforced layers (two layers in total), the volume content $V_1$ of the glass fiber yarn in the glass fiber-reinforced layers was 59.6%, and the volume content $V_2$ of the carbon fiber yarn in the carbon fiber-reinforced layer was 51.0%.

In the fiber-reinforced hollow cylindrical body obtained in the present example, D, T and V were calculated as follows. $D=(D_1\times3^4+D_2\times2^4)/(3^4+2^4)$. $T=(T_1\times3^4+T_2\times2^4)/(3^4+2^4)$. $V=(V_1\times3^4+V_2\times2^4)/(3^4+2^4)$. In the fiber-reinforced hollow cylindrical body obtained in the present example, $T^{1/4}\times V/D^3=0.154$.

Next, the maximum shear stress and elastic shear modulus were calculated in exactly in the same manner as in Example 1 except that the fiber-reinforced hollow cylindrical body obtained in the present example was used. The results are shown in Table 1.

[Comparative Example 1]

In the present comparative example, a fiber-reinforced hollow cylindrical body having an outer diameter of 24 mm, an inner diameter of 20 mm, and a volume content V of the glass fiber yarn of 58.6% was obtained exactly in the same manner as in Example 1, except that, as the reinforcing fiber yarn, a glass fiber yarn (fiber diameter D=17.0 μm, weight T=1150 tex) composed of 2000 glass filaments having an average fiber diameter of 17.0 μm bundled was used, one strand of the glass fiber yarn was placed in the yarn feeding apparatus, and the tension during winding was set to 1.5 kg. In the fiber-reinforced hollow cylindrical body obtained the present comparative example, $T^{1/4}\times V/D^3=0.069$.

Next, the maximum shear stress and elastic shear modulus were calculated in exactly in the same manner as in Example 1 except that the fiber-reinforced hollow cylindrical body obtained in the present comparative example was used. The results are shown in Table 1.

[Table 1]

| | | Example | | | | | | Comparative Example |
|---|---|---|---|---|---|---|---|---|
| | | 1 | 2 | 3 | 4 | 5 | 6 | 1 |
| Glass fiber yarn | Fiber diameter D (μm) | 13.0 | 14.0 | 13.0 | 13.0 | 13.0 | 12.8 | 17.0 |
| | Weight T (tex) | 280 | 800 | 280 | 280 | 280 | 940 | 1150 |
| | Volume content V (%) | 66.5 | 59.6 | 60.8 | 69.8 | 58.5 | 58.2 | 58.6 |
| | $T^{1/4} \times V/D^3$ | 0.124 | 0.116 | 0.113 | 0.130 | 0.109 | 0.154 | 0.069 |

(continued)

| | | Example | | | | | | Comparative Example |
|---|---|---|---|---|---|---|---|---|
| | | 1 | 2 | 3 | 4 | 5 | 6 | 1 |
| Fiber-reinforced resin cylindrical body | Maximum shear stress (MPa) | 359 | 340 | 366 | 324 | 377 | 311 | 275 |
| | Elastic shear modulus (GPa) | 13.2 | 13.7 | 12.7 | 15.8 | 11.9 | 24.0 | 12.5 |

It is clearly seen from Table 1 that the fiber-reinforced resin hollow cylindrical bodies of Examples 1 to 5, in which the fiber diameter D of the glass fiber yarn is in a range of 10.0 to 18.0 $\mu$m, the weight T thereof is in a range of 100 to 1500 tex, the volume content V of the glass fiber yarn in the fiber-reinforced resin hollow cylindrical body is in a range of 40.0 to 80.0%, and $0.090 \leq T^{1/4} \times V/D^3 \leq 0.155$, have a maximum shear stress of 300 MPa or more and an elastic shear modulus of 11.0 GPa or more, and comprise resistance to intense torsion and impact energy absorbency enabling the cylindrical body to be used in an energy absorbing member.

[Example 7]

In the present example, a fiber-reinforced resin hollow cylindrical body was produced using a glass fiber yarn as a reinforcing fiber yarn and using an epoxy resin composition as a resin composition.

The glass fiber yarn comprises the E glass composition, is formed of 2000 glass filaments having an average fiber diameter of 14.0 $\mu$m bundled, and has a fiber diameter D of 14.0 $\mu$m and a weight T of 800 tex. The epoxy resin composition is a mixture obtained by mixing an epoxy resin composition (manufactured by Nagase ChemteX Corporation, trade name: epoxy resin XNR6805), a curing agent (manufactured by Nagase ChemteX Corporation, trade name: XNH6805), and a curing accelerator (manufactured by Nagase ChemteX Corporation, trade name: XNA6805) at a mass ratio of 100:100:2.

Next, after a stainless steel mandrel having an outer diameter of 100 mm was placed in a filament winding apparatus, one strand of the glass fiber yarn was placed in a yarn feeding apparatus, which feeds the reinforcing fiber yarn and controls the tension, and the epoxy resin composition was loaded in the resin bath of the filament winding apparatus. The mandrel has been subjected to fine mirror finishing and demolding treatment.

Subsequently, using the filament winding apparatus, the glass fiber yarn was impregnated with the epoxy resin composition in the resin bath, and the glass fiber yarn was wound under a tension of 1.5 kg to a thickness of 2.2 mm around the mandrel. The operation of winding the glass fiber yarn around the mandrel by the filament winding apparatus was conducted such that, when the direction of the rotation axis (center axis) of the mandrel was taken as 0°, the winding angle would be ±60° (i.e., intersection angle 120°) with respect to in the direction of the rotation axis.

Next, the glass fiber yarn wound around the mandrel was heated at a temperature of 85°C for four hours to cure the epoxy resin composition with which the glass fiber yarn were impregnated.

Subsequently, the cured article of the glass fiber yarn impregnated with the epoxy resin composition was removed from the mandrel using a core remover to thereby obtain a fiber-reinforced hollow cylindrical body having an outer diameter of 105 mm and an inner diameter of 100 mm.

In the fiber-reinforced hollow cylindrical body obtained in the present example, the volume content V of the glass fiber yarn was 63.0%, and $T^{1/4} \times V/D^3 = 0.122$.

Next, the fiber-reinforced hollow cylindrical body obtained in the present example was cut to a length of 135 mm, and a taper portion of an angle of 45° gradually tapering toward the upper end face was provided at the upper end of the body to thereby produce an energy absorbing member.

Subsequently, the energy absorbing member obtained in the present example was clamped between an upper jig and a lower jig and subjected to large falling weight impact test. The large falling weight impact test was conducted by causing a falling weight having a mass of 200 kg to free-fall from a height of 2.46 m at an impact speed of 25 km/h onto the upper jig to thereby place an impact compressive load in the axis direction of the energy absorbing member. The impact load was measured with a load cell attached below the lower jig, and the displacement was measured by image analysis on a moving image photographed with a high speed camera. A load displacement curve was drawn using the impact load and displacement measured, and the total energy absorption capacity until the amount of displacement reached 70 mm was calculated. The total energy absorption capacity calculated was divided by the mass of the portion broken in the large falling weight impact test to calculate the specific energy absorption capacity. The results are shown in Table 2. The values in Table 2 each are an average value of three measurements.

[Example 8]

In the present example, an energy absorbing member was produced exactly in the same manner as in Example 7, except that no taper portion was provided at the upper end.

Next, the specific energy absorption capacity was calculated exactly in the same manner as in Example 7, except that the energy absorbing member obtained in the present example was used. The results are shown in Table 2.

[Example 9]

In the present example, a fiber-reinforced hollow cylindrical body having an outer diameter of 105 mm and an inner diameter of 100 mm was obtained exactly in the same manner as in Example 7, except that, as the reinforcing fiber yarn, a glass fiber yarn (fiber diameter D=13.0 $\mu$m, weight T=280 tex) composed of 800 glass filaments having an average fiber diameter of 13.0 $\mu$m bundled was used, and two strands of the glass fiber yarn were placed in the yarn feeding apparatus. In the fiber-reinforced hollow cylindrical body obtained in the example, the volume content V of the glass fiber yarn was 66.7%, and $T^{1/4} \times V/D^3 = 0.124$.

Next, the fiber-reinforced hollow cylindrical body obtained in the present example was cut to a length of 135 mm, and a taper portion of an angle of 45° gradually tapering toward the upper end face was provided at the upper end of the body to thereby produce an energy absorbing member.

Next, the specific energy absorption capacity was calculated exactly in the same manner as in Example 7, except that the energy absorbing member obtained in the present example was used. The results are shown in Table 2.

[Table 2]

|  |  | Example | | |
|---|---|---|---|---|
|  |  | 7 | 8 | 9 |
| Glass fiber yarn | Fiber diameter D ($\mu$m) | 14.0 | 14.0 | 13.0 |
|  | Weight T (tex) | 800 | 800 | 280 |
|  | Volume content V (%) | 63.0 | 63.0 | 66.7 |
|  | $T^{1/4} \times V/D^3$ | 0.122 | 0.122 | 0.124 |
| Energy absorbing member | Presence of taper portion | Yes | No | Yes |
|  | Specific energy absorption capacity (kj/kg) | 36.9 | 23.8 | 17.8 |

It is clearly seen from Table 2 that the energy absorbing members of Examples 7 to 9, each composed of fiber-reinforced resin hollow cylindrical body in which the fiber diameter D of the glass fiber yarn in the range of 12.0 to 15.0 $\mu$m, the weight T thereof is in the range of 350 to 950 tex, and the volume content V of the glass fiber yarn in the fiber-reinforced resin hollow cylindrical body is in the range of 57.5 to 70.0%, comprises a specific energy absorption capacity of 17.8 kj/kg or more and excellent impact energy absorbency can be provided.

**Claims**

1. A fiber-reinforced resin hollow cylindrical body comprising a reinforcing fiber yarn and a resin composition with which the reinforcing fiber yarn is impregnated, wherein

   a fiber diameter D of the reinforcing fiber yarn is in a range of 10.0 to 18.0 $\mu$m,
   a weight T of the reinforcing fiber yarn is in a range of 100 to 1500 tex,
   a volume content V of the reinforcing fiber yarn in the fiber-reinforced resin hollow cylindrical body is in a range of 40.0 to 80.0%, and
   the D, T and V satisfy the following formula (1):

$$0.090 \leq T^{1/4} \times V/D^3 \leq 0.155 ...(1).$$

2. The fiber-reinforced resin hollow cylindrical body according to claim 1, wherein the D is in a range of 10.5 to 16.0 $\mu$m, the T is in a range of 150 to 1100 tex, and the V is in a range of 55.0 to 75.0%, the D, T and V satisfy the following formula (2):

$$0.111 \leq T^{1/4} \times V/D^3 \leq 0.127 ...(2).$$

3. The fiber-reinforced resin hollow cylindrical body according to claim 2, wherein the D, T and V satisfy the following formula (3):

$$0.115 \leq T^{1/4} \times V/D^3 \leq 0.125 ...(3).$$

4. The fiber-reinforced resin hollow cylindrical body according to any one of claim 1 to claim 3, wherein the D is in a range of 12.0 to 15.0 $\mu$m, the T is in a range of 350 to 950 tex, and the V is in a range of 57.5 to 70.0%.

5. The fiber-reinforced resin hollow cylindrical body according to any one of claim 1 to claim 4, wherein the reinforcing fiber yarn is a glass fiber yarn.

6. The fiber-reinforced resin hollow cylindrical body according to any one of claim 1 to claim 5, wherein a plurality of the reinforcing fiber yarns is disposed spirally and in directions intersecting with one another in the fiber-reinforced resin hollow cylindrical body.

7. The fiber-reinforced resin hollow cylindrical body according to claim 6, being a filament winding molded article.

8. A shaft material comprising the fiber-reinforced resin hollow cylindrical body according to any one of claim 1 to claim 7.

9. An energy absorbing member comprising the fiber-reinforced resin hollow cylindrical body according to any one of claim 1 to claim 7.

10. The energy absorbing member according to claim 9, wherein the fiber-reinforced resin hollow cylindrical body comprises a taper portion at an upper end or a lower end thereof, the portion gradually tapering toward an end face.

## INTERNATIONAL SEARCH REPORT

| International application No. |
| --- |
| PCT/JP2019/044102 |

| A. CLASSIFICATION OF SUBJECT MATTER |
| --- |
| Int. Cl. B29K 105/08(2006.01)n, B29L 31/30(2006.01)n, B29C 70/06(2006.01)i, B29C 70/32(2006.01)i<br>FI: B29C70/32, B29C70/06, B29K105:08, B29L31:30<br>According to International Patent Classification (IPC) or to both national classification and IPC |

| B. FIELDS SEARCHED |
| --- |
| Minimum documentation searched (classification system followed by classification symbols)<br>Int. Cl. B29K105/08, B29L31/30, B29C70/06, B29C70/32 |
| Documentation searched other than minimum documentation to the extent that such documents are included in the fields searched<br>Published examined utility model applications of Japan      1922-1996<br>Published unexamined utility model applications of Japan    1971-2020<br>Registered utility model specifications of Japan            1996-2020<br>Published registered utility model applications of Japan    1994-2020 |
| Electronic data base consulted during the international search (name of data base and, where practicable, search terms used) |

| C. DOCUMENTS CONSIDERED TO BE RELEVANT |
| --- |

| Category* | Citation of document, with indication, where appropriate, of the relevant passages | Relevant to claim No. |
| --- | --- | --- |
| X<br>Y | JP 6493646 B1 (NITTO BOSEKI CO., LTD.) 03 April 2019, claims 1, 4, paragraphs [0037], [0059]-[0068], [0075], [0078], [0089], [0112], [0115], [0123], [0124] | 1-7, 9<br>8, 10 |
| Y | WO 2010/084809 A1 (FUJIKURA RUBBER LTD.) 29 July 2010, paragraph [0009], | 8 |
| Y | 坂田憲泰，高強度ガラス繊維を用いた FW 円筒のエネルギー吸収特性，強化プラスチックス，22 May 2018, vol. 64, no. 5, pp. 212-217, p. 213, left column, lines 10-31, SAKATA, Kazuhiro, Energy Absorption Properties of FW Cylinder Using High Strength Glass Fiber, Reinforced Plastics | 10 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>20.01.2020 | Date of mailing of the international search report<br>28.01.2020 |
| --- | --- |
| Name and mailing address of the ISA/<br>  Japan Patent Office<br>  3-4-3, Kasumigaseki, Chiyoda-ku,<br>  Tokyo 100-8915, Japan | Authorized officer<br><br><br>Telephone No. |

Form PCT/ISA/210 (second sheet) (January 2015)

**INTERNATIONAL SEARCH REPORT**
Information on patent family members

International application No.

PCT/JP2019/044102

| Patent Documents referred to in the Report | Publication Date | Patent Family | Publication Date |
|---|---|---|---|
| JP 6493646 B1 | 03.04.2019 | (Family: none) | |
| WO 2010/084809 A1 | 29.07.2010 | US 2011/0281061 A1 paragraph [0012] EP 2390087 A1 CN 102292208 A TW 201028340 A KR 10-2011-0117077 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6143273 A